# EUROPÄISCHE PATENTSCHRIFT

(11) **EP 2 065 684 B1**
(45) Veröffentlichungstag und Bekanntmachung des Hinweises auf die Patenterteilung: **25.05.2016**
(21) Anmeldenummer: 08012890.3
(22) Anmeldetag: 17.07.2008
(51) Int. Cl.: G01D 5/347, G01D 5/244

(54) **Justiermittel und dazugehöriger Körper mit einer Skalierung sowie Verfahren zum Justieren**
Adjustment device and corresponding bodies with scaling and method for adjusting
Moyen d'ajustement et corps correspondant doté d'une échelle ainsi que procédé d'ajustement

(30) Priorität: 29.11.2007 DE 102007057556
(43) Veröffentlichungstag der Anmeldung: 03.06.2009
(73) Patentinhaber: Dr. Johannes Heidenhain GmbH, 83301 Traunreut (DE)
(72) Erfinder: Martin, Michael, 83352 Altenmarkt (DE); Huber, Helmut, 84518 Garching a.d. Alz (DE)

(56) Entgegenhaltungen:
- EP-A1- 1 643 216
- EP-A2- 0 385 418
- DE-A1-102004 050 834

## Beschreibung

Die Erfindung betrifft ein Justiermittel und einen dazugehörigen Körper mit einer Skalierung gemäß dem Anspruch 1. Weiterhin betrifft die Erfindung ein Verfahren zum Justieren eines Körpers mit einer Skalierung gemäß dem Anspruch 11.

Derartige Körper mit einer Skalierung werden häufig als Maßverkörperung in Winkelmesssystemen eingesetzt. Winkelmesssysteme dienen zur Messung von Drehbewegungen bzw. Drehstellungen eines Maschinenteils, etwa einer Welle. Die Drehbewegung wird dabei entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in so genannten Pick-and-Place-Maschinen in der Fertigung von elektronischen Bauteilen verwendet, oder in Werkzeugmaschinen für die Messung von rotatorischen Bewegungen eingesetzt. Die Reproduzierbarkeit, bzw. Wiederholbarkeit der Drehwinkel von Maschinenteilen auf nur wenige Winkelsekunden genau ist beispielsweise bei Pick-and-Place-Maschinen von großer Bedeutung. Bei Werkzeugmaschinen ist häufig die absolute Genauigkeit der Messergebnisse eines Winkelmesssystems entscheidend. Häufig sind Winkelmesssysteme derart ausgestaltet, dass diese keine eigene Lagerung der relativ zueinander drehbaren Bauteile aufweisen.

Die Genauigkeit einer Winkelmessung wird wesentlich durch die Güte der Winkelskalierung, die Exzentrizität der Winkelskalierung zur Lagerung und durch die Rundlauf-Abweichung der Lagerung beeinflusst. Insbesondere erzeugen gerade bei Winkelmesssystemen ohne Eigenlagerung nicht selten auftretende Montageabweichungen Messfehler.

Aus der Offenlegungsschrift EP 1 643 216 A1 ist ein Verfahren zur Zentrierung eines Körpers mit einer Winkelskalierung bekannt, bei dem eine Messeinrichtung verwendet wird, die an definierten Punkten des Körpers anzulegen ist. Gemäß den Messergebnissen der Messeinrichtung ist der Körper entsprechend zu verschieben bzw. zu justieren.

Es zeigt sich jedoch, dass es schwierig sein kann den Körper genau und zuverlässig um weniger als Hundertstel- oder Tausendstel-Millimeter zu verschieben, wie es für das Erreichen von hohen Genauigkeiten im späteren Betrieb der betreffenden Messgeräte erforderlich ist.

Der Erfindung liegt die Aufgabe zu Grunde, eine Vorrichtung zu schaffen, mit der es möglich ist auf einfache Weise einen Körper mit einer Skalierung überaus exakt, also mit minimaler Fehlausrichtung, zu justieren.

Diese Aufgabe wird durch die Vorrichtung, umfassend ein Justiermittel und einen Körper mit einer Skalierung, gemäß dem Anspruch 1 gelöst, bzw. durch das Verfahren gemäß dem Anspruch 11.

Demnach umfasst die erfindungsgemäße Vorrichtung einen Körper mit einer Skalierung, wobei die Skalierung aus optisch erfassbaren Strichen oder Flächen bestehen kann oder beispielsweise aus unterschiedlich magnetisierten Bereichen zur Abtastung mit einem Magnetsensor. Ferner umfasst die Vorrichtung ein Justiermittel mit einem Betätigungsmittel, einem Kontaktbereich, einem Gelenk und einem Befestigungsmittel. Dabei sind der Körper und das Justiermittel so ausgestaltet, dass der Kontaktbereich an einem Anschlagpunkt mit dem Körper in Berührkontakt bringbar ist und der Körper und das Justiermittel in eine Wirkverbindung nach dem Prinzip eines einseitigen Hebels bringbar sind, mit dem Gelenk als Drehpunkt. Auf diese Weise ist eine durch das Betätigungsmittel in das Justiermittel eingeleitete Kraft über den Kontaktbereich als Verschiebekraft auf den Körper übertragbar. Gleichzeitig ist das Befestigungsmittel des Justiermittels mit einem Maschinenteil derart verbindbar, dass eine Reaktionskraft vom Justiermittel in das Maschinenteil übertragbar ist.

Neben den bereits erwähnten Skalierungen für optische oder magnetische Abtastungen, kann die Skalierung auch so ausgestaltet sein, dass diese nach den bekannten induktiven oder kapazitiven Prinzipien abtastbar ist.

Der Anschlagpunkt kann an einem vorbestimmten Bereich des Körpers zu liegen kommen. Mit Vorteil weist der Körper eine Ausnehmung, beispielsweise eine durchgehende Bohrung, innerhalb welcher der Anschlagpunkt zu liegen kommt auf.

Unter einem einseitigen Hebel ist ein Hebel zu verstehen bei dem, von der Drehachse aus gesehen, zwei Kräfte auf einer Seite angreifen. In der vorliegenden Erfindung sind die beiden Kräfte die Kraft, die, insbesondere vom Bediener, durch das Betätigungsmittel in das Justiermittel eingeleitet wird und die Reaktionskraft des Körpers als Folge der Verschiebekraft.

In einer bevorzugten Ausgestaltung der Erfindung ist das Gelenk als ein Festkörpergelenk ausgestaltet. Im Folgenden ist als Festkörpergelenk eine Stelle mit verminderter Biegesteifigkeit zu verstehen, die sich durch diese Eigenschaft von benachbarten Abschnitten oder Zonen des Justiermittels, die als Starrkörper angesehen werden können, abgrenzt. Die verminderte Biegesteifigkeit kann durch eine lokale Querschnittsverringerung erzeugt werden, etwa durch einen reduzierten kreisförmigen Querschnitt. Mit Vorteil kann die Verjüngung kontinuierlich, ohne einen Sprung ausgestaltet sein und beispielsweise in der Seitenansicht die Form eines Kreisbogens aufweisen.

Mit Vorteil ist das Justiermittel so ausgestaltet, dass bei Auslenkung des Gelenks Rückstellkräfte erzeugbar sind. Insbesondere bei der Verwendung eines Festkörpergelenks werden durch die elastische Verformung bei Auslenkung des Festkörpergelenks derartige (Hook'sche) Rückstellkräfte erzeugt. Das Justiermittel bzw. dessen Befestigungsmittel ist dann so ausgestaltet, dass damit Reaktionsmomente vom Justiermittel in das Maschinenteil übertragbar sind.

In weiterer Ausgestaltung der Erfindung sind der Körper ringförmig und die Skalierung als Winkelskalierung ausgestaltet. Dabei kann der Körper eine Winkelskalierung aufweisen, dessen Teilung radial oder axial ausgerichtet ist. Im letzteren Fall ist mit Vorteil die Winkelskalierung an einer Mantelseite eines zylindrischen Körpers aufgebracht, so dass die einzelnen Teilungsmarkierungen axial ausgerichtet und in Umgangsrichtung versetzt angeordnet sind. Die Erfindung umfasst im Übrigen auch Körper mit einer linearen Skalierung.

Als Kontaktbereich ist ein Bereich zu verstehen, an dem das Justiermittel an einem Anschlagpunkt des Körpers in Berührkontakt zum Körper, insbesondere zur Ausnehmung des Körpers, steht. Mit Vorteil liegt der Kontaktbereich auf einer keilförmigen oder konischen Fläche des Justiermittels. Insbesondere kann der Kontaktbereich auf einer Kegelstumpffläche liegen, bzw. kann ein Abschnitt des Justiermittels als Kegelstumpffläche ausgebildet sein.

Die Ausnehmung kann beispielsweise als Loch, Bohrung, Langloch oder Öse ausgestaltet sein. Insbesondere durchdringt die Ausnehmung den Körper, beispielsweise in Form einer Durchgangsbohrung. Mit Vorteil kann der maximale Außendurchmesser der Kegelstumpffläche größer sein als der minimale Innendurchmesser der Ausnehmung. Demnach weist auch der Körper, insbesondere im Bereich der Ausnehmung, einen Anschlagpunkt oder mehrere Anschlagpunkte, also einen Berührbereich auf, der mit dem Kontaktbereich des Körpers in Berührung bringbar ist. Beispielsweise können die Ausnehmung und der Körper so ausgestaltet sein, dass der Berührbereich der Ausnehmung und der Kontaktbereich des Justiermittels entlang einer umlaufenden Linie verlaufen.

Mit Hilfe der erfindungsgemäßen Vorrichtung ist es möglich, eine überaus exakte Justierung des Körpers zu erreichen, so dass also der Körper mit der Winkelskalierung präzise montierbar ist und so der Anbau die Voraussetzung für eine Winkelmessung hoher Genauigkeit erfüllt. Entsprechend kann die erfindungsgemäße Vorrichtung auch als ein Set gesehen werden, bestehend aus einem Justiermittel und mindestens einem Körper mit einer Winkelskalierung.

Weiterhin betrifft die Erfindung ein Verfahren zum Justieren eines Körpers mit einer Skalierung unter Verwendung eines Justiermittels, welches ein Betätigungsmittel, einen Kontaktbereich, ein Gelenk und ein Befestigungsmittel umfasst. Dabei weist das Verfahren folgende Schritte auf:
Platzieren des Körpers auf einem Maschinenteil, wobei naturgemäß im Allgemeinen der Körper nicht optimal zum Maschinenteil platziert werden wird, so dass eine Fehlausrichtung des Körpers vorliegt;

Verbinden des Befestigungsmittels des Justiermittels mit dem Maschinenteil in der Weise, dass ein Berührkontakt zwischen dem Körper und dem Kontaktbereich des Justiermittels hergestellt wird; Insbesondere kann das Befestigungsmittel mit dem Maschinenteil verschraubt werden.

Bestimmung der Fehlausrichtung des Körpers relativ zum Maschinenteil, insbesondere mit einer geeigneten Messeinrichtung;

Einleiten einer Kraft in das Betätigungsmittel, beispielsweise durch die Hand eines Bedieners. Dabei werden der Körper und das Justiermittel in eine Wirkverbindung nach dem Prinzip eines einseitigen Hebels gebracht, mit dem Gelenk des Justiermittels als Drehpunkt, so dass die Kraft über den Kontaktbereich als Verschiebekraft auf den Körper übertragen wird. Die Verschiebekraft ist so orientiert, dass durch die hierdurch hervorgerufene Verschiebung des Körpers eine Reduzierung des Ausmaßes der Fehlausrichtung erfolgt.

In den meisten Fällen wird eine Wiederholung der Bestimmung der Fehlausrichtung des Körpers vorteilhaft sein und ggf. dann eine Wiederholung der Einleitung einer Verschiebekraft.

Mit Vorteil können mehrere Justiermittel gleichzeitig mit dem Maschinenteil verbunden werden, so dass eine abwechselnde Bedienung der einzelnen Justiermittel vorgenommen wird.

In weiterer Ausgestaltung der Erfindung wird der Körper nach dessen Platzieren auf dem Maschinenteil derart am Maschinenteil befestigt, dass beim Einleiten der Kräfte eine Verschiebebewegung möglich ist. Insbesondere kann diese vorteilhafte Funktionalität mit Hilfe einer Schraubverbindung erreicht werden, wobei die Reibkraft zwischen dem Körper und dem Maschinenteil durch das Anzugsmoment der Schrauben exakt eingestellt werden kann, so dass eine Verschiebung durch ein Justiermittel möglich ist, während ansonsten der Körper im Hinblick auf die Justierprozedur sicher am Maschinenteil befestigt ist.

Der Körper kann ringförmig und dessen Skalierung als Winkelskalierung ausgestaltet sein, so dass dann die Fehlausrichtung eine Exzentrizität ist.

Die Erfindung weist insbesondere den Vorteil auf, dass die Montage für den Anwender eines derartigen Winkelmessgerätes wesentlich vereinfacht ist, so dass der entsprechende Anwender beispielsweise nicht über eine komplexe Montageausrüstung verfügen muss.

Vorteilhafte Ausführungsformen der erfindungsgemäßen Vorrichtung und des Verfahrens sind aus den Maßnahmen in den vom Anspruch 1 bzw. 11 abhängigen Ansprüchen zu entnehmen.

Weitere Vorteile, sowie Einzelheiten der erfindungsgemäßen Vorrichtung und des Verfahrens ergeben sich aus der nachfolgenden Beschreibung eines möglichen Ausführungsbeispiels anhand der beiliegenden Figuren.

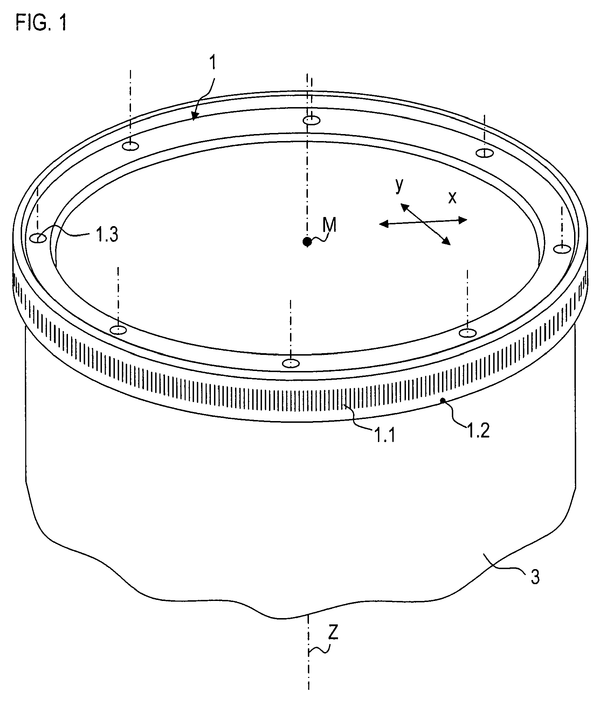

Es zeigen die
- Figur 1: eine perspektivische Ansicht eines Körpers mit einer Winkelskalierung auf einem Maschinenteil vor der Justierung,
- Figur 2: eine Seitenansicht eines Justiermittels,
- Figur 3: eine Teilschnittdarstellung durch den Körper und das Maschinenteil,
- Figur 4: eine Teilschnittdarstellung durch den Körper und das Maschinenteil mit dem Justiermittel im Eingriff.

Im vorgestellten Ausführungsbeispiel ist der Körper als Ringkörper 1 ausgestaltet. Auf der Mantelseite 1.2 des Ringkörpers 1 ist eine Skalierung 1.1 aufgebracht. Weiterhin umfasst der Ringkörper 1 den Ringkörper 1 durchdringende Bohrungen 1.3 zur Befestigung des Ringkörpers 1 auf einem Maschinenteil, welches hier eine Welle 3 einer Maschine ist.

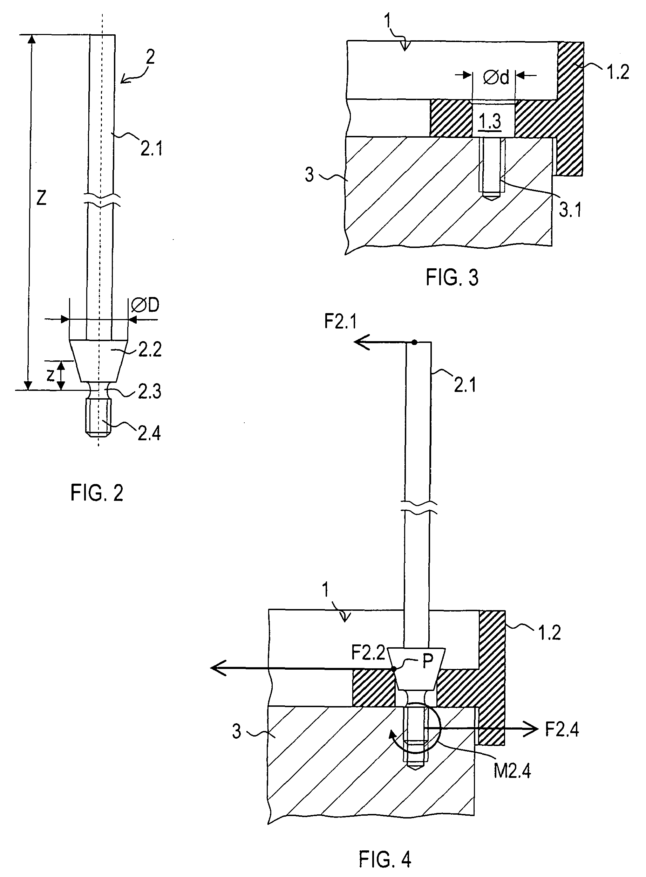

Ferner umfasst die erfindungsgemäße Vorrichtung ein Justiermittel 2 (Figur 2). Das Justiermittel 2 ist im vorgestellten Ausführungsbeispiel einstückig ausgestaltet und als Metallteil gefertigt. Das Justiermittel 2 weist vier Abschnitte auf. Der erste Abschnitt ist als Betätigungsmittel 2.1 ausgestaltet. Im Zuge der Justiertätigkeit soll bestimmungsgemäß ein Bediener das Justiermittel 2 am Betätigungsmittel 2.1 angreifen bzw. damit hantieren. Als zweiter Abschnitt ist ein Kontaktbereich 2.2 vorgesehen, der im Ausführungsbeispiel auf einer Kegelstumpffläche eines Konus liegt. Der Konus bzw. die Kegelstumpffläche hat einen maximalen Durchmesser D. Der dritte Abschnitt ist als ein Gelenk 2.3 ausgeführt, insbesondere, wie im Ausführungsbeispiel beschrieben, als ein Festkörpergelenk. Schließlich ist als vierter Abschnitt ein Befestigungsmittel 2.4 zu sehen, welches hier als zylindrischer Bereich mit einem Außengewinde ausgeführt ist. Das Gelenk 2.3 liegt also zwischen dem Befestigungsmittel 2.4 und dem Kontaktbereich 2.2, bzw. zwischen dem Befestigungsmittel 2.4 und dem Betätigungsmittel 2.1.

In der Figur 3 ist eine Teilschnittdarstellung durch den Ringkörper 1 und durch die Welle 3 gezeigt und zwar in einer Stellung, wie sie zu Beginn der Montage vorliegt. Entsprechend ist daher der Ringkörper 1 auf der Welle 3 so platziert, dass dessen Bohrungen 1.3 in erster Näherung mit Gewindebohrungen 3.1 in der Welle 3 fluchten. Der minimale Innendurchmesser der Bohrungen 1.3 beträgt im Übrigen d. Naturgemäß liegt nach dem Platzieren des Ringkörpers 1 eine unzulässig große Fehlausrichtung, bzw. Exzentrizität zwischen dem Ringkörper 1 und der Welle 3 vor.

Im nächsten Montageschritt werden Justiermittel 2 mit der Welle verbunden. Im vorgestellten Ausführungsbeispiel werden zu diesem Zweck drei Justiermittel 2 in jeweils eine Bohrungen 1.3 gesteckt und das Befestigungsmittel 2.4 in Gewindebohrungen 3.1 der Welle 3 gedreht bis jeweils der Kontaktbereich 2.2 auf der Kegelstumpffläche den Ringkörper 1 bzw. die Innenwand der Bohrung 1.3 berührt. Demnach ist ein Innenbereich der Bohrungen 1.3 als Anschlagpunkt P bzw. hier als Berührbereich am Ringkörper 1, bzw. in den Bohrungen 1.3 ausgebildet. Der Berührbereich in den Bohrungen 1.3 und der Kontaktbereich 2.2 des Justiermittels 2 berühren sich entlang einer umlaufenden Linie, auf welcher sich ein Anschlagpunkt P befindet. Dadurch, dass der Kontaktbereich 2.2 auf der Kegelstumpffläche liegt wird hier eine erste, grobe Zentrierung des Ringkörpers 1 erreicht, wobei das Gelenk 2.3 leicht auf Zug belastet wird. Für ein optimales Ergebnis werden im Übrigen Bohrungen 1.3 zum Einbringen der drei Justiermittel 2 ausgewählt, die möglichst weit voneinander beabstandet sind.

Als Nächstes werden in die restlichen Bohrungen 1.3, in die keine Justiermittel zum Eingriff kommen, Schrauben gesteckt und ebenfalls in Gewindebohrungen 3.1 der Welle 3 gedreht. Die Bohrungen 1.3 weisen einen etwas größeren Innendurchmesser d auf, als die Außendurchmesser der Schrauben. Zunächst werden die Schrauben nur verhältnismäßig leicht angezogen, so dass eine radial gerichtete Verschiebung des Ringkörpers 1 in der x-y-Ebene relativ zur Welle 3 möglich ist.

Im nächsten Schritt wir nun die Justierung des Ringkörpers 1 in Bezug auf die Welle 3, bzw. auf einen Mittelpunkt M auf der Drehachse Z, vorgenommen. Zu diesem Zweck wird eine Messeinrichtung an mehreren über den Umfang versetzt angeordneten Punkten der Mantelseite 1.2 angesetzt und die Fehlausrichtung, bzw. Exzentrizität bestimmt. Üblicherweise liegt durch die bereits vorgenommene grobe Zentrierung (durch das bloße Anbringen der Justiermittel 2) die verbleibende Exzentrizität in der Größenordnung von Mikrometern.

Im Zuge der Justiermaßnahmen muss nun der Ringkörper 1 in der x-y-Ebene um wenige Mikrometer oder nur um Bruchteile davon in eine Richtung verschoben werden, so dass das zuvor bestimmte Ausmaß der Fehlausrichtung bzw. Exzentrizität reduziert wird. Zu diesem Zweck kann der Bediener nun die Betätigungsmittel 2.1 in die gewünschte Richtung manuell bewegen, beispielsweise kann er gemäß der Figur 4 eine radial nach innen gerichtete Kraft F2.1 in das Betätigungsmittel 2.1 einleiten. Entsprechend wird vom Kontaktbereich 2.2 eine Verschiebekraft F2.2 an den Ringkörper 1 übertragen mit der eine elastische Verformung des Gelenks 2.3 einhergeht und zu einer radialen Verschiebung des Ringkörpers 1 führt. Ein wesentlicher Anteil der Verschiebekraft F2.2 resultiert aus Reibungskräften zwischen dem Ringkörper 1 und der Welle 3, wobei die entsprechende Normalkraft durch die in diesem Stadium bereits eingedrehten Schrauben aufgebracht wird. Das in der Gewindebohrung 3.1 fixierte Befestigungsmittel 2.4 überträgt die Reaktionskraft F2.4 an die Welle 3. Die Reaktionskraft F2.4 kann in erster Näherung als die Differenz F2.1 - F2.2 bestimmt werden. Weiterhin wird durch die Rückstellkraft des Gelenks 2.3 ein Reaktionsmoment M2.4 vom Befestigungsmittel 2.4 an die Welle 3 übertragen. Das Justiermittel 2 wird also mit dem Ringkörper 1 in eine Wirkverbindung nach dem Prinzip des einseitigen Hebels gebracht. Dabei greifen beide Kräfte F2.1, F2.2 von der Drehachse bzw. dem Gelenk 2.3 aus gesehen, auf einer Seite an. Der Abstand z (siehe Figur 2) zwischen dem Gelenk 2.3 als Drehachse und dem Kontaktbereich 2.2 ist vergleichsweise klein gegenüber dem Abstand Z zwischen dem Gelenk 2.3 und dem Krafteinleitungspunkt am Betätigungsmittel 2.1. Entsprechend führen die Bewegungen am Betätigungsmittel 2.1 zu sehr kleinen Verschiebebewegungen am Ringkörper 1. Im vorgestellten Ausführungsbeispiel betragen der Abstand Z = 200 mm und der Abstand z = 2 mm.

Die Bestimmung der Exzentrizität und das Verschieben des Ringkörpers 1 muss in der Regel mehrmals wiederholt werden. Nach dieser Justierung, wenn also die Messeinrichtung eine ausreichend kleine Exzentrizität anzeigt, wird der Ringkörper 1 in der justierten Position durch weiteres Anziehen der bereits eingedrehten Schrauben fest auf die Welle 3 geschraubt. Die drei Justiermittel 2 können dann entfernt und zur Befestigung des Körpers 1 durch weitere Schrauben ersetzt werden. Demnach weist also zumindest ein Teil der Bohrungen 1.3 eine Doppelfunktion auf, denn die bereffenden Bohrungen 1.3 dienen zunächst als Ausnehmung zur Wechselwirkung mit dem Justiermittel 2 und danach zur Befestigung des Ringkörpers 1 an der Welle 3.

Im späteren Betrieb wird die Skalierung 1.1 des Ringkörpers 1 optisch abgetastet zur hochgenauen Bestimmung der Winkellage der Welle 3.

## Patentansprüche

1. Vorrichtung umfassend
- einen Körper (1) mit einer Skalierung (1.1), und
- ein Justiermittel (2), mit
▪ einem Betätigungsmittel (2.1)
▪ einem Kontaktbereich (2.2),
▪ einem Gelenk (2.3),
▪ einem Befestigungsmittel (2.4), **dadurch gekennzeichnet, dass**
der Körper (1) und das Justiermittel (2) so ausgestaltet sind, dass der Kontaktbereich (2.2) mit dem Körper (1) an einem Anschlagpunkt (P) in Berührkontakt bringbar ist und dass weiterhin der Körper (1) und das Justiermittel (2) in eine Wirkverbindung nach dem Prinzip eines einseitigen Hebels bringbar sind, mit dem Gelenk (2.3) als Drehpunkt, so dass eine durch das Betätigungsmittel (2.1) in das Justiermittel (2) eingeleitete Kraft (F2.1) über den Kontaktbereich (2.2) als Verschiebekraft (F2.2) auf den Körper (1) übertragbar ist und
das Befestigungsmittel (2.4) als ein zylindrischer Bereich des Justiermittels (2) mit einem Außengewinde ausgeführt ist, so dass das Befestigungsmittel (2.4) mit einem Maschinenteil (3) derart verbindbar ist, dass eine Reaktionskraft (F2.4) vom Justiermittel (2) in das Maschinenteil (3) übertragbar ist.

2. Vorrichtung gemäß dem Anspruch 1, wobei der Körper eine Ausnehmung (1.3) aufweist, innerhalb welcher der Anschlagpunkt (P) zu liegen kommt.

3. Vorrichtung gemäß dem Anspruch 1 oder 2, wobei das Gelenk (2.3) als ein Festkörpergelenk ausgestaltet ist.

4. Vorrichtung gemäß einem der vorhergehenden Ansprüche, wobei bei Auslenkung des Gelenks (2.3) eine Rückstellkraft erzeugbar ist und ein Reaktionsmoment (M2.4) vom Justiermittel (2) in das Maschinenteil (3) übertragbar ist.

5. Vorrichtung gemäß einem der vorhergehenden Ansprüche, wobei der Körper (1) ringförmig und die Skalierung (1.1) als Winkelskalierung ausgestaltet sind.

6. Vorrichtung gemäß dem Anspruch 5, wobei die Skalierung (1.1) an einer Mantelseite des Körpers (1) aufgebracht ist.

7. Vorrichtung gemäß einem der vorhergehenden Ansprüche, wobei der Kontaktbereich (2.2) auf einer keilförmigen oder konischen Fläche liegt.

8. Vorrichtung gemäß dem Anspruch 7, wobei der Kontaktbereich (2.2) auf einer Kegelstumpffläche liegt.

9. Vorrichtung gemäß dem Anspruch 2, wobei die Ausnehmung (1.3) als Bohrung ausgestaltet ist.

10. Vorrichtung gemäß dem Anspruch 8 und 9, wobei der maximale Außendurchmesser (D) der Kegelstumpffläche größer ist als der minimale Innendurchmesser (d) der Bohrung.

11. Verfahren zum Justieren eines Körpers (1) mit einer Skalierung (1.1) unter Verwendung eines Justiermittels (2), welches ein Betätigungsmittel (2.1), einen Kontaktbereich (2.2), ein Gelenk (2.3) und ein Befestigungsmittel (2.4) umfasst, mit folgenden Schritten:
- Platzieren des Körpers (1) auf einem Maschinenteil (3),
- Verbinden des Befestigungsmittels (2.4) mit dem Maschinenteil (3), wobei das Befestigungsmittel (2.4) als ein zylindrischer Bereich des Justiermittels (2) mit einem Außengewinde ausgeführt ist, in der Weise, dass ein Berührkontakt zwischen dem Körper (1) und dem Kontaktbereich (2.2) des Justiermittels (2) hergestellt wird,
- Bestimmung einer Fehlausrichtung des Körpers (1) relativ zum Maschinenteil (3),
- Einleiten einer Kraft (F2.1) in das Betätigungsmittel (2.1), wobei der Körper (1) und das Justiermittel (2) in eine Wirkverbindung nach dem Prinzip eines einseitigen Hebels gebracht werden, mit dem Gelenk (2.3) des Justiermittels (2) als Drehpunkt, so dass die Kraft (F2.1) über den Kontaktbereich (2.2) als Verschiebekraft (F2.2) auf den Körper (1) übertragen wird, zur Reduzierung des Ausmaßes der Fehlausrichtung.

12. Verfahren gemäß dem Anspruch 11, wobei mehrere Justiermittel (2) mit dem Maschinenteil (3) verbunden werden.

13. Verfahren gemäß dem Anspruch 11 oder 12, wobei der Körper (1) nach dessen Platzieren auf dem Maschinenteil (3), insbesondere durch eine Schraubverbindung, derart am Maschinenteil (3) befestigt wird, dass beim Einleiten der Kräfte (F2.1) eine Verschiebebewegung möglich ist.

14. Verfahren gemäß einem der Ansprüche 11 bis 13, wobei der Körper (1) ringförmig und die Skalierung (1.1) als Winkelskalierung ausgestaltet sind und die Fehlausrichtung eine Exzentrizität ist.

15. Verfahren gemäß einem der Ansprüche 11 bis 14, wobei der Kontaktbereich (2.2) auf einer keilförmigen oder konischen Fläche liegt und das Verbinden des Justiermittels (2) am Befestigungsmittel (2.4) mit dem Maschinenteil (3) bereits ein Vorjustieren des Körpers (1) bewirkt.

## Claims

1. Device comprising
- a body (1) having a scale (1.1), and
- an adjustment means (2) having
• an actuating means (2.1),
• a contact region (2.2),
• a joint (2.3),
• a fastening means (2.4), **characterized in that**
the body (1) and the adjustment means (2) are configured such that the contact region (2.2) is able to be brought into touching contact with the body (1) at an abutment point (P), and **in that** furthermore the body (1) and the adjustment means (2) are able to be brought into operative connection on the principle of a one-sided lever, with the joint (2.3) as the fulcrum, such that a force (F2.1) introduced into the adjustment means (2) by the actuating means (2.1) is transferable to the body (1) as a displacement force (F2.2) via the contact region (2.2), and
the fastening means (2.4) is embodied as a cylindrical region of the adjustment means (2) with an external thread, such that the fastening means (2.4) is connectable to a machine part (3) such that a reaction force (F2.4) is transferable from the adjustment means (2) into the machine part (3).

2. Device according to Claim 1, wherein the body has a recess (1.3) within which the abutment point (P) comes to rest.

3. Device according to Claim 1 or 2, wherein the joint (2.3) is configured as a flexure bearing.

4. Device according to one of the preceding claims, wherein, when the joint (2.3) is deflected, a restoring force is producible and a reaction torque (M2.4) is transferable from the adjustment means (2) into the machine part (3).

5. Device according to one of the preceding claims, wherein the body (1) is configured in an annular manner and the scale (1.1) is configured as an angular scale.

6. Device according to Claim 5, wherein the scale (1.1) is applied to a literal side of the body (1).

7. Device according to one of the preceding claims, wherein the contact region (2.2) is located on a wedge-shaped or conical surface.

8. Device according to Claim 7, wherein the contact region (2.2) is located on a frustoconical surface.

9. Device according to Claim 2, wherein the recess (1.3) is configured as a bore.

10. Device according to Claims 8 and 9, wherein the maximum outside diameter (D) of the frustoconical surface is larger than the minimum inside diameter (d) of the bore.

11. Method for adjusting a body (1) having a scale (1.1) using an adjustment means (2) which comprises an actuating means (2.1), a contact region (2.2), a joint (2.3) and a fastening means (2.4), having the following steps of:
- placing the body (1) on a machine part (3),
- connecting the fastening means (2.4) to the machine part (3), wherein the fastening means (2.4) is embodied as a cylindrical region of the adjustment means (2) with an external thread, such that touching contact between the body (1) and the contact region (2.2) of the adjustment means (2) is established,
- determining an incorrect orientation of the body (1) relative to the machine part (3),
- introducing a force (F2.1) into the actuating means (2.1), wherein the body (1) and the adjustment means (2) are brought into operative connection on the principle of a one-sided lever, with the joint (2.3) of the adjustment means (2) as the fulcrum, such that the force (F2.1) is transferred to the body (1) as a displacement force (F2.2) via the contact region (2.2), in order to reduce the extent of the incorrect orientation.

12. Method according to Claim 11, wherein a plurality of adjustment means (2) are connected to the machine part (3).

13. Method according to Claim 11 or 12, wherein, after it has been placed on the machine part (3), the body (1) is fastened to the machine part (3), in particular by a screw connection, such that a displacement movement is possible when the forces (F2.1) are introduced.

14. Method according to one of Claims 11 to 13, wherein the body (1) is configured in an annular manner and the scale (1.1) is configured as an angular scale and the incorrect orientation is an eccentricity.

15. Method according to one of Claims 11 to 14, wherein the contact region (2.2) is located on a wedge-shaped or conical surface and the connection of the adjustment means (2) to the machine part (3) by way of the fastening means (2.4) already brings about pre-adjustment of the body (1).

## Revendications

1. Dispositif comprenant :
- un corps (1) comprenant une échelle (1. 1), et
- un moyen d'ajustement (2), avec
- un moyen d'actionnement (2.1)
- une région de contact (2.2),
- une articulation (2.3),
- un moyen de fixation (2.4), **caractérisé en ce que**
le corps (1) et le moyen d'ajustement (2) sont configurés de telle sorte que la région de contact (2.2) puisse être amenée en contact avec le corps (1) au niveau d'un point de butée (P) et **en ce que** le corps (1) et le moyen d'ajustement (2) peuvent en outre être amenés en liaison fonctionnelle selon le principe d'un levier unilatéral, l'articulation (2.3) servant de centre de rotation, de telle sorte qu'une force (F2.1) introduite par le moyen d'actionnement (2.1) dans le moyen d'ajustement (2) puisse être transmise par le biais de la région de contact (2.2) sous forme de force de déplacement (F2.2) au corps (1) et
le moyen de fixation (2.4) est réalisé sous forme de région cylindrique du moyen d'ajustement (2) avec un filetage extérieur de telle sorte que le moyen de fixation (2.4) puisse être connecté à une partie de machine (3) de telle sorte qu'une force de réaction (F2.4) puisse être transmise du moyen d'ajustement (2) dans la partie de machine (3).

2. Dispositif selon la revendication 1, dans lequel le corps présente un évidement (1.3) à l'intérieur duquel le point de butée (P) vient se placer.

3. Dispositif selon la revendication 1 ou 2, dans lequel l'articulation (2.3) est configurée sous forme d'articulation à corps solide.

4. Dispositif selon l'une quelconque des revendications précédentes, dans lequel, lors de la déviation de l'articulation (2.3), une force de rappel peut être générée et un couple de réaction (M2.4) peut être transmis du moyen d'ajustement (2) à la partie de machine (3).

5. Dispositif selon l'une quelconque des revendications précédentes, 1 dans lequel le corps (1) est réalisé de manière annulaire et l'échelle (1.1) est réalisée sous forme d'échelle graduée.

6. Dispositif selon la revendication 5, dans lequel l'échelle (1.1) est appliquée sur un côté d'enveloppe du corps (1).

7. Dispositif selon l'une quelconque des revendications précédentes, dans lequel la région de contact (2.2) est située sur une surface en forme de clavette ou une surface conique.

8. Dispositif selon la revendication 7, dans lequel la région de contact (2.2) est située sur une surface tronconique.

9. Dispositif selon la revendication 2, dans lequel l'évidement (1.3) est configuré sous forme d'alésage.

10. Dispositif selon les revendications 8 et 9, dans lequel le diamètre extérieur maximal (D) de la surface tronconique est supérieur au diamètre intérieur minimal (d) de l'alésage.

11. Procédé d'ajustement d'un corps (1) avec une échelle (1.1) en utilisant un moyen d'ajustement (2) qui comprend un moyen d'actionnement (2.1), une région de contact (2.2), une articulation (2.3) et un moyen de fixation (2.4), comprenant les étapes suivantes :
- positionnement du corps (1) sur une partie de machine (3),
- connexion du moyen de fixation (2.4) à la partie de machine (3), le moyen de fixation (2.4) étant réalisé sous forme de région cylindrique du moyen d'ajustement (2) avec un filetage extérieur, de telle sorte qu'un contact entre le corps (1) et la région de contact (2.2) du moyen d'ajustement (2) soit établi,
- détermination d'une erreur d'orientation du corps (1) par rapport à la partie de machine (3),
- introduction d'une force (F2.1) dans le moyen d'actionnement (2.1), le corps (1) et le moyen d'ajustement (2) étant amenés en liaison fonctionnelle selon le principe d'un levier unilatéral, l'articulation (2.3) du moyen d'ajustement (2) servant de centre de rotation de telle sorte que la force (F2.1) soit transmise par le biais de la région de contact (2.2) sous forme de force de déplacement (F2.2) au corps (1) afin de réduire l'ampleur de l'erreur d'orientation.

12. Procédé selon la revendication 11, dans lequel plusieurs moyens d'ajustement (2) sont connectés à la partie de machine (3).

13. Procédé selon la revendication 11 ou 12, dans lequel le corps (1), après avoir été placé sur la partie de machine (3), en particulier par une connexion par vissage, est fixé à la partie de machine (3) de telle sorte que lors de l'introduction des forces (F.21), un mouvement de déplacement soit possible.

14. Procédé selon l'une quelconque des revendications 11 à 13, dans lequel le corps (1) est configuré sous forme annulaire et l'échelle (1.1) est configurée sous forme d'échelle graduée et l'erreur d'orientation est une excentricité.

15. Procédé selon l'une quelconque des revendications 11 à 14, dans lequel la région de contact (2.2) est située sur une surface en forme de clavette ou une surface conique et la connexion du moyen d'ajustement (2) au niveau du moyen de fixation (2.4) à la partie de machine (3) provoque déjà un pré-ajustement du corps (1).
